Europäisches Patentamt

**European Patent Office**

**Office européen des brevets**

(11) Publication number: **0 150 868**
A2

(12) **EUROPEAN PATENT APPLICATION**

(21) Application number: **85200007.4**

(22) Date of filing: **05.01.85**

(51) Int. Cl.⁴: **B 23 D 33/02**

---

(30) Priority: **31.01.84 IT 8331484**

(43) Date of publication of application: **07.08.85**
**Bulletin 85/32**

(84) Designated Contracting States: **AT BE CH DE FR GB LI LU NL SE**

(71) Applicant: **DANIELI & C. OFFICINE MECCANICHE S.p.A., Via Nazionale, 19, I-33042 Buttrio (UD) (IT)**

(72) Inventor: **Rattieri, Gianni, Via Garibaldi, 128, I-33040 Pradamano (UD) (IT)**

(74) Representative: **Petraz, Gilberto Luigi, G.L.P. S.a.s. di Gilberto Petraz P.le Cavedalis 6/2, I-33100 Udine (IT)**

---

(54) **Procedure for shearing rolled products at high speed, and a shears with deviator which carries out such procedure.**

(57) This invention concerns a procedure for shearing rolled products, and in particular rolled bars (14), which is suitable for shearing rolled products (14) sliding at high and very high speeds and in which the rolled product (14) in motion is deviated sideways locally and brought into contact at an angle with stationary blade means (15), the rolled product (14) thus being sheared.

The invention also concerns a high-speed shears with deviator (10), which is suitable for carrying out the above procedure and comprises a channel (11) for delivering rolled products (14), a channel (12) to forward the same (14) to a usage means and a channel (13) for scrap and includes stationary blade means (15) and means (16-18) to deviate the rolled product (14) upstream from such blade means (15).

**"PROCEDURE FOR SHEARING ROLLED PRODUCTS AT HIGH SPEED, AND A**

**SHEARS WITH DEVIATOR WHICH CARRIES OUT SUCH PROCEDURE"**

*********

This invention concerns a procedure for shearing rolled products at high speed. To be more exact, the invention concerns a procedure for shearing rolled products which is suitable for shearing rolled products sliding at high and very high speeds (from 80 metres per second and higher and advantageously, but not only, at 100-120 metres per second or higher).

According to the invention the rolled product is sheared with a new criterion never used heretofore.

The invention also concerns a high-speed shears with deviator which performs the above shearing procedure.

Solutions are known which are directed towards the shearing of rolled stock travelling at high speed by means of blades which also move at high speed.

For instance, patent DE 329.500 is known and performs the shearing of rolled stock by means of a blade which can move obliquely to the rolled stock and which cooperates with another stationary blade. Th component of the speed of the movable blade in the direction of movement of the rolled stock is equal to or greater than the speed at which the rolled stock travels. This solution, like other known systems, makes use of movable blades.

But the present invention obtains the shearing of the rolled stock according to a criterion different from the known art and without employing movable blades, which would entail problems of actuation, inertia and maintenance.

Studies conducted by the present applicant have shown that in the case of rolled products travelling at high speed and in particular of round rolled bars of the most slender diameters it is possible to shear the rolled products by making them perform a sharp deviation. Such shearing method is applicable when either the head or tail of the rolled product is to be sheared.

Such deviation can be obtained in various ways and enables a bend to be formed in the rolled product by exploiting the inertia of the same when moving at a very high speed and also its resilience.

According to the invention such bend is made to strike at very high speed against a stationary blade, which causes the shearing of the rolled product according to an oblique section.

It is possible to obtain a very clean and highly accurate cut by a suitable conformation of the stationary blade and by a selection of the geometric parameters of the deviation of the rolled bar, such as the extent of the deviation, the angle between the axis of the bar forming the bend and the axis of the blade, the radius of curvature of the bend, etc.

According to experiments conducted by the present applicant, such operation can be repeated perfectly and it is possible to set the obliquity of the inclination of the cut in relation to the axis of the bar.

It is possible to deliver the rolled product to the shearing zone according to a substantially straight or curved trajectory, a curved trajectory having the purpose of employing the centrifugal force building up in the rolled product in a curved segment of its path as a result of its very high sliding speed.

With the help of such centrifugal force it is possible to enhance the formation of the bend and to increase its curvature so as to obtain a cut with an obliquity advantageously reduced in a crosswise direction.

The invention enables the deviation of the bar to be performed by mechanical means, such as movable guides or sliders, or else by fluid jet means, or by cooperation of both such means, or by mechanical equivalents.

Let us say it once more, the basic concept on which this invention is founded is the employment of the inertia and resilience of the bar so as to form a curved segment of bar, or elbow, which comes into contact with a stationary blade and is sheared.

This invention is therefore obtained with a procedure for shearing rolled products, and in particular rolled bars, which is suitable for shearing rolled products sliding at high and very high speeds and is characterized by the fact that the rolled product in motion is deviated sideways locally and brought into contact at an angle with stationary blade means, the rolled product thus being sheared by such blade means.

The invention is also embodied with a high-speed shears with deviator which is suitable for carrying out the above procedure and comprises a channel to deliver rolled products, a channel to send the same to usage means and a channel for scrap, the shears being characterized by including:
- stationary blade means, and
- means to deviate the rolled products upstream from such blade means.

We shall describe hereinafter some non-restrictive preferred embodiments of the invention with the help of the attached figures, in which:-

Fig.1 is a view of a shears with deviator and with a straight entry for the rolled product;

Fig.2 is a view of a variant with a curved entry and with the formation of an elbow assisted by jets of a fluid;

Fig.3 shows a device with a symmetrical deviation of the rolled bar.

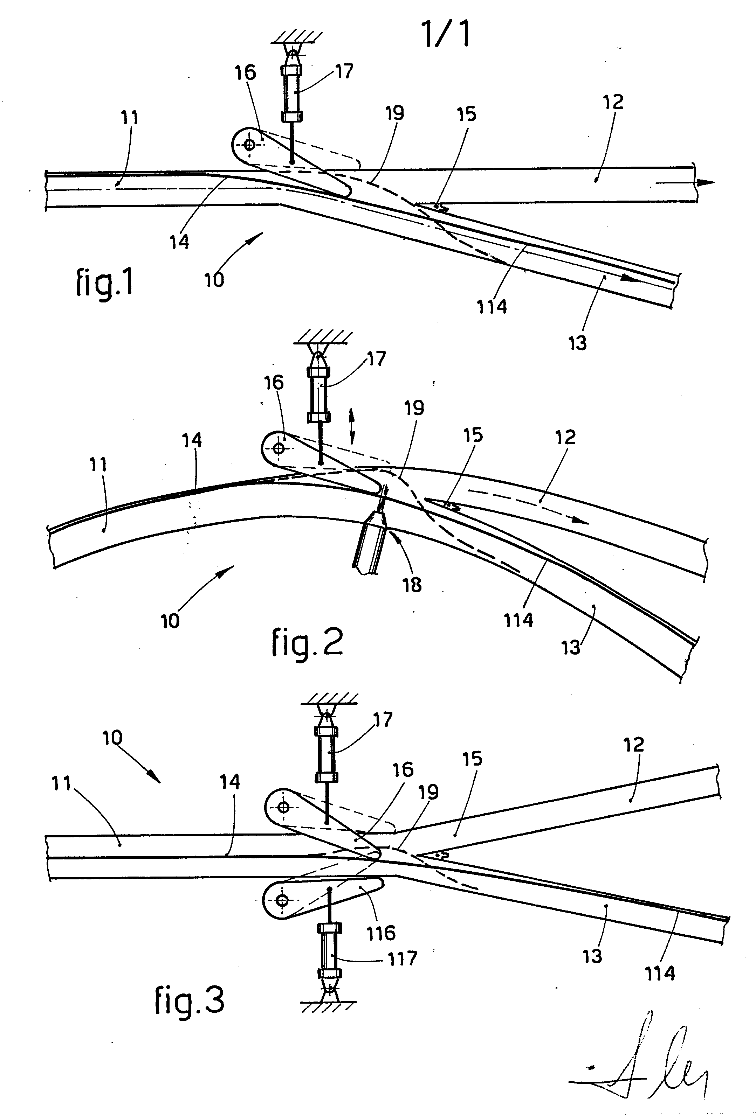

In Fig.1 a shears with deviator 10 comprises a channel 11 to deliver rolled products 14. A rolled bar 14 is delivered in this channel.

The channel 11 comprises a Y-junction with a channel 12 to forward rolled products to a usage means; in this example the channel 12 proceeds in the same straight line as the channel 11; the other branch of such Y-junction is a branch channel 13 for scrap and, in the embodiment shown, runs at an angle to the delivery channel 11.

However, both the above branch channels 12-13 can be embodied at an angle to the channel 11, the angles being selected as required in relation to the axis of the delivery channel 11.

A mechanical deviator 16, which consists substantially of a slider able to rotate about a vertical axis and operated by an actuator 17, which in this example is a jack, enables the rolled bar 14 to be directed into the channel for scrap 13 (position marked with full lines in the figure) or into the channel 12 for forwarding to a usage means (position marked with lines of dashes).

For its head to be cropped, the rolled product 14 is sent first with its head 114 into the channel 13, the deviator 16 being in the position shown with full lines in Fig.1.

Next, when the desired length of head 114 has passed, the deviator 16 is brought sharply to the position shown with lines of dashes in the figure.

Such length of head can be monitored, for instance, with optoelectronic means or other sensors, or with timed devices of known types, as the speed of the rolled product 14 is known.

The inertia of the bar 14 running at high speed in the channel 11 causes the bar 14 to take up a configuration with an elbow, which is given the reference 19 and is shown with a line of dashes.

The elbow 19 encounters with a given angle of incidence a stationary blade 15, which is fitted in correspondence with the internal corner between the branch channels 12 and 13.

Such blade 15 may consist, for instance, of a hard material and be advantageously interchangeable.

The elbow 19, therefore, strikes at high speed against the blade 15 and is sheared sharply thereby and the head 114 proceeds along the channel 13, from which it is sent to be scrapped.

The bar 14, now without its head, continues its way along the channel 12 and is straightened at once by resilience in the portion which formed the elbow 19.

The bar 14, therefore, proceeds thus along its straight path.

For the tail of the bar to be sheared, the deviator 16 is brought back to the position shown with full lines in Fig.1. In this way the tail of the bar 14 is bent and meets the blade 15 at a certain angle and therefore is sheared and sent for scrap in the channel 13.

The shape of the blade 15 is governed by the type of cut to be obtained and by the obliquity of such cut in relation to the axis of the rolled product 14 in movement.

Fig.2 shows an embodiment like Fig.1 in which the formation of the elbow 19 is assisted by centrifugal force. This is obtained by applying a curved shape, in the horizontal plane, to the delivery channel 11 and also to the forwarding channel 12 and preferably also to an initial segment of the scrap channel 13.

The method of working is analogous to that of Fig.1, but Fig.2 shows also fluid jet means 18 which have the task of assisting formation of the elbow 19 by acting directly on the segment in question of the bar 14 in motion.

It is possible in this way to obtain a particularly pronounced elbow 19 so that the angle of incidence in relation to the blade 15 is very wide.

The cut can be made thus at a wide inclination to the axis of the bar 14 in the segment corresponding to the elbow 19. In this way the sheared bar 14 has a better quality and is more easily usable.

It is possible to obtain an almost transverse cut by means of a suitable choice of the conformation of the blade 15.

To cut the tail, the deviator 16 is brought to the position marked with full lines and the shearing takes place in a manner analogous to that of Fig.1.

Lastly, Fig.3 shows an embodiment that employs two deviators 16-116 arranged symmetrically.

The channel 12 for forwarding to a usage means and the scrap channel 13 are positioned symmetrically in relation to the axis of the channel 11 in this example.

The deviators 16-116 are shown with full lines in their positions to send the bar 14 for its head 114 to be sheared for scrap.

As soon as a great enough length of head 114 has passed, the deviators 16-116 are brought to their positions marked with lines of dashes and in this way the bar 14 is constrained to produce an elbow 19, which is sheared against the blade 15. The remainder of the bar 14 proceeds within the channel 12.

Here too, to obtain the shearing of the tail, the deviators 16-116 are brought to the positions shown with full lines in the figure by actuators 17-117.

The tail of the bar 14 is bent at an angle such that it strikes sharply against the end of the blade 15 and is sheared and directed into the channel 13, from which it is discharged.

In this case too it is possible to employ auxiliary means such as jets of fluid, etc. to enhance the deviation of the bar 14 in forming the elbow 19.

We have described some preferred embodiments of this invention, but variants are possible without departing thereby from the scope of the invention.

## INDEX

10  - shears with deviator

11  - delivery channel

12  - channel for forwarding to usage means

13  - channel for scrap

14  - rolled bar

114 - head of bar

15  - blade

16  - mechanical deviator

116 - mechanical deviator

17  - actuator

117 - actuator

18  - fluid jet means

19  - elbow.

**CLAIMS**

\*\*\*\*

1 - Procedure for shearing rolled products, and in particular rolled bars (14), which is suitable for shearing rolled products (14) sliding at high and very high speeds and is characterized by the fact that the rolled product (14) in motion is deviated sideways locally and brought into contact at an angle with stationary blade means (15), the rolled product (14) thus being sheared by such blade means (15).

2 - Procedure for shearing rolled products as claimed in Claim 1, in which the deviation of the rolled product (14) entails momentarily the formation of an elbow (19) immediately upstream from the blade means (15).

3 - Procedure for shearing rolled products as claimed in Claim 1 or 2, in which the deviation of the rolled product (14) is obtained by displacing mechanical means (16-116) sideways.

4 - Procedure for shearing rolled products as claimed in Claim 1 or 2, in which the deviation of the rolled product (14) is obtained by acting on the rolled product (14) with fluid jet means (18).

5 - Procedure for shearing rolled products as claimed in any claim hereinbefore, in which the deviation of the rolled product (14) is assisted by centrifugal force, the path of the rolled product (14) being caused to be curved at least for a segment near the blade means (15) (Fig.2).

6 - Procedure for shearing rolled products as claimed in any claim hereinbefore, which is applied to the shearing of the head (114) of the rolled product (14).

7 - Procedure for shearing rolled products as claimed in any of Claims 1 to 5 inclusive, which is applied to the shearing of the tail of the rolled product (14).

8 - High-speed shears with deviator (10), which is suitable for carrying out the procedure of Claims 1 to 7 inclusive and

comprises a channel (11) for delivering rolled products (14), a channel (12) to forward the same (14) to a usage means and a channel (13) for scrap, such shears (10) being characterized by comprising:

- stationary blade means (15), and

- means (16-18) to deviate the rolled product (14) upstream from such blade means (15).

9 - High-speed shears with deviator (10) as claimed in Claim 8, in which the blade means (15) are positioned between the forwarding channel (12) and the channel (13) for scrap.

10 - High-speed shears with deviator (10) as claimed in Claim 8 or 9, in which the deviator means include at least one mechanical deviator (16).

11 - High-speed shears with deviator (10) as claimed in Claim 8 or 9, in which the deviator means include at least a jet of fluid (18).

12 - High-speed shears with deviator (10) as claimed in any of Claims 8 to 11 inclusive, in which the delivery channel (11) is straight (Figs.1 and 3).

13 - High-speed shears with deviator (10) as claimed in any of Claims 8 to 11 inclusive, in which the delivery channel (11) includes at least one curved segment (Fig.2).

14 - High-speed shears with deviator (10) as claimed in any of Claims 8 to 13 inclusive, in which the channel (12) for forwarding rolled products (14) to a usage means and the channel (13) for scrap are positioned at an angle as required.

0150868

1/1

fig.1

fig.2

fig.3